# FASCICULE DE BREVET EUROPEEN

(11) **EP 3 796 105 B1**
(45) Date de publication et mention de la délivrance du brevet: **02.09.2026**
(21) Numéro de dépôt: 19199020.9
(22) Date de dépôt: 23.09.2019
(51) Int. Cl.: G04B 19/32, G04B 45/00

(54) **ÉLÉMENT D'HORLOGERIE**
UHRENELEMENT
ELEMENT FOR A TIMEPIECE

(43) Date de publication de la demande: 24.03.2021
(60) Demande divisionnaire: 26158025.2 / 4 733 861
(73) Titulaire: The Swatch Group Research and Development Ltd, 2074 Marin (CH)
(72) Inventeur: FRANÇOIS, Nicolas, 2000 Neuchâtel (CH); MARLOT DOERR, Agnès, 2000 Neuchâtel (CH); GOVAERTS, Carole, 1346 Les Bioux (CH)
(74) Mandataire: ICB SA

(56) Documents cités:
- EP-A1- 3 379 345
- WO-A2-2008/052989
- US-A- 3 851 460
- INES DREAMER: "Probando la resina RESINPRO", 2 December 2018 (2018-12-02), XP054980366, Retrieved from the Internet <URL:https://youtu.be/YiP3PBJGAOE>

## Description

### Domaine de l'invention

L'invention se rapporte à un élément d'horlogerie comprenant un substrat et au moins un premier élément de décor comprenant au moins un premier matériau photoluminescent destiné à donner un aspect phosphorescent lorsque l'élément est placé dans l'obscurité. La présente invention concerne également une pièce d'horlogerie comprenant un tel élément.

### Arrière-plan de l'invention

On connait par exemple l'utilisation d'un tel matériau photoluminescent pour réaliser des revêtements destinés à recouvrir les aiguilles ou les index d'une montre, afin que lesdites aiguilles ou lesdits index soient lumineux et apparaissent dans l'obscurité.

Le brevet CH 697 210 décrit un cadran comprenant une couche semi-transparente dont la face arrière comprend des cavités remplies de pigments phosphorescents qui permettent de faire apparaitre sous la couche semi-transparente un décor visible dans l'obscurité.

Toutefois, même si les décors comprenant des pigments phosphorescents utilisés sur un élément d'horlogerie sont sensés ne pas être perceptibles lorsque l'élément décoré est exposé à la lumière du jour, ces décors apparaissent malgré tout, en particulier pour un œil professionnel averti. Les décors phosphorescents qui transparaissent à la lumière du jour nuisent donc à l'esthétisme de la pièce d'horlogerie, ce qui n'est pas acceptable, en particulier pour des pièces d'horlogerie haut de gamme.

Le document WO 2008/052989 A2 décrit une montre avec glace sur laquelle sont déposées côté mouvement une couche partielle nanométrique de pigments fluorescents et/ou phosphorescents, suivie d'une couche diffusante invisible d'épaisseur submicronique ou nanométrique constituée d'oxyde de Zinc ou de dioxyde de Titane.

### Résumé de l'invention

La présente invention a pour but de remédier à ces inconvénients en proposant un élément d'horlogerie comprenant un matériau photoluminescent destiné à donner dans l'obscurité un aspect phosphorescent, ledit matériau photoluminescent étant masqué lorsque l'élément est exposé à la lumière, afin d'améliorer son aspect esthétique.

A cet effet, l'invention se rapporte à un élément d'horlogerie comprenant un substrat et au moins un premier élément de décor comprenant au moins un premier matériau photoluminescent destiné à donner un aspect phosphorescent.

Selon l'invention, ledit élément d'horlogerie comprend un second élément de décor comprenant au moins un second matériau, ledit second matériau étant métallique, destiné à donner un aspect métallique, ou variochromique, destiné à donner une couleur variant sous l'effet d'un stimulus, ledit premier élément de décor et ledit second élément de décor étant agencés l'un par rapport à l'autre sur le substrat pour former un décor d'aspect métallique ou d'une couleur variant sous l'effet d'un stimulus lorsque ledit élément est exposé à la lumière et d'aspect phosphorescent lorsque ledit élément est dans l'obscurité.

Ainsi, lorsque l'élément d'horlogerie selon l'invention est exposé à la lumière, le premier matériau photoluminescent déposé sur ledit élément disparait au profit d'un aspect métallique apporté par le second matériau.

En conséquence, l'élément d'horlogerie exposé à la lumière présente un aspect esthétique amélioré, le premier matériau photoluminescent d'aspect inesthétique étant alors masqué, tout en présentant un bel aspect phosphorescent dans l'obscurité.

La présente invention concerne également une pièce d'horlogerie comprenant un tel élément.

### Description sommaire des dessins

D'autres caractéristiques et avantages de l'invention apparaîtront plus clairement à la lecture de la description suivante de différents modes de réalisation de l'invention, donnés à titre de simples exemples illustratifs et non limitatifs, et des figures annexées, parmi lesquelles :
- les figures 1 à 3 sont des vues schématisées en coupe de différents modes de réalisation d'une première variante de réalisation d'un élément d'horlogerie selon (figure 1) ou proches de (figures 2 et 3) la présente invention ; et
- les figures 4 à 6 sont des vues schématisées en coupe de différents modes de réalisation d'une seconde variante de réalisation d'un élément d'horlogerie proche de la présente invention.

### Description détaillée des modes de réalisation préférés

La présente invention concerne un élément d'horlogerie comprenant un substrat et au moins un premier élément de décor comprenant au moins un premier matériau photoluminescent destiné à donner un aspect phosphorescent dans l'obscurité.

Un tel élément d'horlogerie peut être un cadran, une aiguille, un index, une lunette, une glace, côté cadran ou côté fond, une boite de montre, etc.

Le substrat peut être opaque ou semi-transparent, voire transparent. Un substrat opaque peut être par exemple métallique. Il peut être en laiton, à base d'or, jaune ou blanc, ou d'argent, ou tout autre métal ou alliage, précieux ou non, approprié.

Les substrats semi-transparents et transparents peuvent être du verre, du verre saphir, une résine acrylique ou toute autre résine appropriée.

Conformément à la présente invention, l'élément d'horlogerie comprend un second élément de décor comprenant au moins un second matériau, ledit second matériau étant métallique, destiné à donner un aspect métallique, nacré ou destiné à donner un effet nacré (particules de verres revêtues de couche interférentielles) ou variochromique, destiné à donner une couleur variant sous l'effet d'un stimulus, ledit premier élément de décor et ledit second élément de décor étant agencés l'un par rapport à l'autre sur le substrat pour former un décor d'aspect métallique ou d'une couleur variant sous l'effet d'un stimulus lorsque ledit élément est exposé à la lumière et d'aspect phosphorescent lorsque ledit élément est dans l'obscurité.

D'une manière préférée, le premier matériau est constitué de pigments photoluminescents, de préférence du type SrAl₂O₄:Eu²⁺,Dy³⁺,B³⁺ ou MAl₂Si₂O₈:Eu²⁺ (M=Ba,Sr,Ca).

D'une manière générale, la teneur massique en pigments dans le premier élément de décor peut être comprise entre 1 % et 70%, avec à 1 % une transparence de la couche du premier élément de décor, une intensité lumineuse faible à t=5mn de l'ordre de 10 mCd/m2 mesure selon ISO 17514, et à 70% une opacité de la couche du premier élément de décor, une intensité lumineuse de l'ordre de 500 mCd/m2 à t=5mn mesure selon ISO 17514. Idéalement la teneur massique en pigment est de 50% pour avoir un compromis entre un bon état de surface du premier élément de décor et l'intensité lumineuse recherchée.

Dans la présente description, on appelle « matériau métallique » un matériau au moins partiellement métallique pouvant comprendre des particules non métalliques et des particules métalliques ainsi qu'un matériau entièrement métallique.

Selon une première variante de l'invention, le second matériau du second élément de décor est présent sous la forme de particules dispersées dans le second liant.

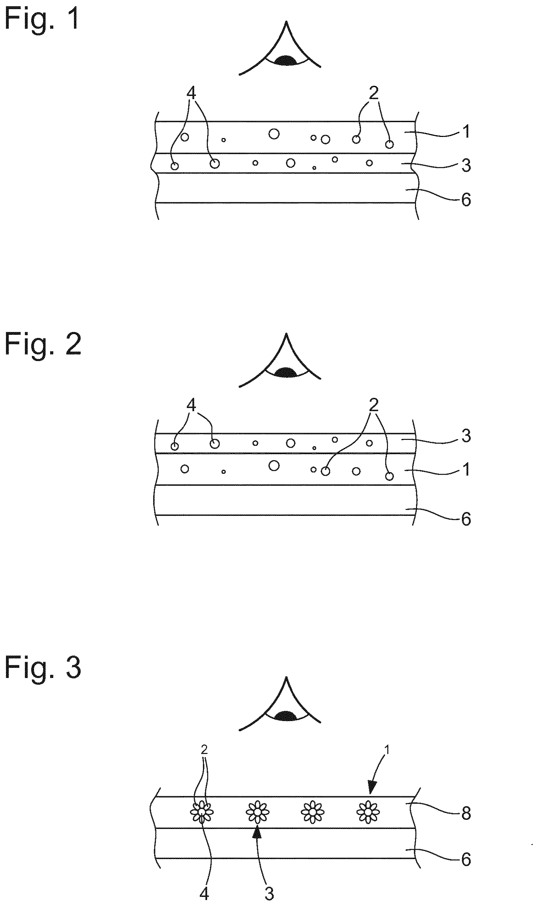

Selon un premier mode de réalisation de l'invention représenté sur la figure 1, le décor est bicouche, formé d'une première couche au moins semi-transparente, voire transparente, constituant le premier élément de décor 1 et comprenant un premier liant dans lequel sont dispersés, comme premier matériau, des pigments photoluminescents 2, et d'une seconde couche constituant le second élément de décor 3 et comprenant un second liant dans lequel sont dispersées, comme second matériau, des particules 4 métalliques ou métallisées pelliculantes, ou nacrées ou des particules variochromiques, ladite seconde couche 3 étant disposée entre le substrat 6 et la première couche 1 destinée à être au plus près d'un utilisateur.

La première couche semi-transparente ou transparente au spectre visible constituant le premier élément de décor 1 présente de préférence une épaisseur comprise entre 0.1 mm et 2 mm.

Dans le cas particulier du premier mode de réalisation selon lequel la première couche est semi-transparente ou transparente, ladite première couche comprend entre 1 % et 10% en poids de pigments photoluminescents tels que définis ci-dessus.

La seconde couche constituant le second élément de décor 3 présente de préférence une épaisseur <100mu

Dans la seconde couche 3, les particules sont choisies afin de réfléchir avantageusement la lumière pour rendre les particules phosphorescentes indétectables à l'œil. Il s'agit soit de particules 4 métalliques ou métallisées, pelliculantes, qui créent un effet miroir pour une réflexion optimale de la lumière. Elles sont avantageusement constituées de lamelles fines métalliques de granulométrie de préférence comprise entre 10 µm et 500 µm, et (par exemple aluminium, bronze, or, argent) soit de de particules inorganiques (oxyde d'aluminium, dioxyde de silicium et borosilicates) métallisées sous vide (par exemple par PVD, les différentes couches déposées par PVD pouvant permettre avantageusement de créer des couleurs interférentielles donnant des aspects irisés ou nacrés).

Les particules variochromiques sont constituées au moins de pigments de type photochromique ou de pigments de type thermochromique tels que les nanoparticules à effet de transition de spins.

La première couche au moins semi-transparente constituant le premier élément de décor 1 à base de pigments photoluminescents 2 et la seconde couche constituant le second élément de décor 3 à base de particules 4 métalliques ou variochromiques sont superposées, la première couche 1 étant destinée à être au plus près de l'utilisateur. Ainsi, le décor formé par la superposition des premier et second éléments de décor 1, 3 présente un aspect métallique ou une couleur variant sous l'effet d'un stimulus lié au matériau variochromique, donné par le second élément de décor 3 apparaissant sous le premier élément de décor 1 transparent lorsque l'élément d'horlogerie est exposé à la lumière, et le décor présente un aspect phosphorescent donné par le premier élément de décor 1 positionné au plus près de l'utilisateur, lorsque l'élément d'horlogerie est dans l'obscurité.

Selon un deuxième mode de réalisation qui ne fait pas parti de l'invention et représenté sur la figure 2, le décor est bicouche, formé d'une première couche constituant le premier élément de décor 1 et comprenant un premier liant dans lequel sont dispersés, comme premier matériau, des pigments photoluminescents 2 tels que définis ci-dessus, et d'une seconde couche transparente constituant le second élément de décor 3 et comprenant un second liant dans lequel sont dispersées, comme second matériau, des particules 4 métalliques ou métallisées non pelliculantes ou des particules variochromiques, ladite première couche 1 étant disposée entre le substrat 6 et la seconde couche 3 destinée à être au plus d'un utilisateur.

La première couche constituant le premier élément de décor 1 présente de préférence une épaisseur comprise entre 0.1 mm et 2 mm. Dans ce mode de réalisation, la première couche n'est pas nécessairement transparente ou semi-transparente.

La seconde couche transparente constituant le second élément de décor 3 présente de préférence une épaisseur comprise <100mu

Les particules 4 métalliques ou métallisées non pelliculantes sont par exemple les particules métallisées décrites ci-dessus pour le premier mode de réalisation, mais pour lesquelles par exemple un acide gras insaturé a été utilisé pendant le broyage des particules afin de modifier leur tension de surface. Cela permet également de mieux répartir les particules dans la couche et d'améliorer la résistance à l'abrasion.

Dans le cas particulier du deuxième mode de réalisation qui ne fait pas parti de l'invention, et selon lequel la seconde couche 3 est transparente, ladite seconde couche transparente comprend moins de 5 % en poids de particules métallisées afin d'obtenir cette transparence le pourcentage étant sensiblement identique pour les particules variochromiques.

La première couche constituant le premier élément de décor 1 à base de pigments photoluminescents 2 et la seconde couche transparente constituant le second élément de décor 3 à base de particules 4 métalliques ou variochromiques sont superposées, la seconde couche 3 étant destinée à être au plus près de l'utilisateur. Ainsi, le décor formé par la superposition des premier et second éléments de décor 1, 3 présente un aspect métallique ou une couleur variant sous l'effet d'un stimulus lié au matériau variochromique, donné par le second élément de décor 3 positionné au plus près de l'utilisateur lorsque l'élément d'horlogerie est exposé à la lumière, et le décor présente un aspect phosphorescent donné par le premier élément de décor 1 apparaissant sous le second élément de décor 3 transparent, lorsque l'élément d'horlogerie est dans l'obscurité.

Selon un troisième mode de réalisation qui ne fait pas parti de l'invention et représenté sur la figure 3, le décor est monocouche, destiné à être au plus près d'un utilisateur, et formé d'une troisième couche 8 déposée sur le substrat 6 du côté de l'utilisateur pour être au plus près de l'utilisateur, et comprenant un troisième liant dans lequel sont dispersées des particules 4 métalliques ou métallisées ou des particules variochromiques formant le second élément de décor 3 et revêtues de pigments photoluminescents 2 formant le premier élément de décor 1.

Pour cela, on utilise de préférence des particules 4 métalliques ou métallisées ou nacrées ou des particules variochromiques du type défini ci-dessus, de granulométrie comprise entre 100 µm et 500 µm, et de préférence comprise entre 100 µm et 200 µm. Les pigments photoluminescents 2 du type défini ci-dessus ont de préférence une taille inférieure à 10 µm. On réalise au préalable une dispersion de pigments photoluminescents 2 comprenant au poids 5 à 30% de pigments photoluminescents dans une matrice liquide polymère/solvant. Différents procédés sont ensuite possibles :
- la dispersion de pigments photoluminescents formée est directement pulvérisée sur les particules métalliques, métallisées ou variochromiques qui sont étalées sur une plaque, puis séchées. Le tout est ensuite broyé par broyage cryogénique afin que les particules éventuellement collées entre elles puissent être séparées.
- on mélange les particules métalliques, métallisées ou variochromiques dans la dispersion de pigments photoluminescents puis on introduit le mélange obtenu dans un atomiseur permettant de sécher rapidement les pigments photoluminescents autour des particules métalliques, métallisées ou variochromiques. Le séchage peut également être réalisé dans des séchoirs à plateau (« tray drying ») ou par séchage à lit fluidisé (« fluid bed drying ») puis l'ensemble est rebroyé par broyage cryogénique. Les particules obtenues sont ensuite dispersées dans le troisième liant.

Une autre alternative demande la préparation suivante des pigments à effets métallisés ou nacrés. Ceux-ci sont revêtus d'un film pré-polymère fin et transparent (entre 20-50 microns) par un traitement en bain (mélange de 80% d'un solvant, 15 % de monomères, 2% de durcisseurs et 3% d'additifs). Les pigments traités sont ensuite mélangés par friction dans un broyeur à billes avec une dispersion de pigments phosphorescents.

Les pigments résultants de ce processus sont ensuite traités pour finaliser la polymérisation (cuisson thermique).

La troisième couche transparente constituant le décor présente de préférence une épaisseur comprise entre 10 µm et 100 µm.

Ainsi, le décor formé par ladite troisième couche présente un aspect métallique ou une couleur variant sous l'effet d'un stimulus lié au matériau variochromique, donné par les particules 4 métalliques, métallisées ou variochromiques apparaissant sous le revêtement de pigments photoluminescents 2 dans la troisième couche transparente 8 lorsque l'élément d'horlogerie est exposé à la lumière, et le décor présente un aspect phosphorescent donné par le revêtement de pigments photoluminescents 2 formé autour des particules 4 métalliques, métallisées ou variochromiques, lorsque l'élément d'horlogerie est dans l'obscurité.

Les premier, second et troisième liants utilisés dans les première, seconde et troisième couches définies ci-dessus sont choisis en fonction du procédé d'application de la couche correspondante et de la transparence que la couche doit présenter.

En particulier, lorsque l'une des première ou seconde couche doit être au moins semi-transparente, voire transparente, le liant et les éventuels additifs présents dans la couche sont sélectionnés pour être le plus transparent possible aux rayonnements UV et visibles. On pourra choisir par exemple un liant acrylate.

Les première, seconde et troisième couche comprenant les particules associées dispersées dans le liant peuvent être déposées sur le substrat par pulvérisation ou trempage si la totalité du substrat doit être revêtue, ou par sérigraphie si un motif doit être réalisé, ou par tampographie par exemple si le substrat a une surface complexe.

Selon une deuxième variante proche de de l'invention, le substrat est au moins semi-transparent, voire transparent, et le second matériau du second élément de décor est présent sous la forme d'un film métallique rapporté par collage par exemple ou formé par un dépôt en phase vapeur, tel que PVD ou CVD. Un film métallique avec une laque est également envisageable

Le film métallique est typiquement réalisé en inox, aluminium, en PET aluminisé ou recouvert d'une couche PVD d'or.

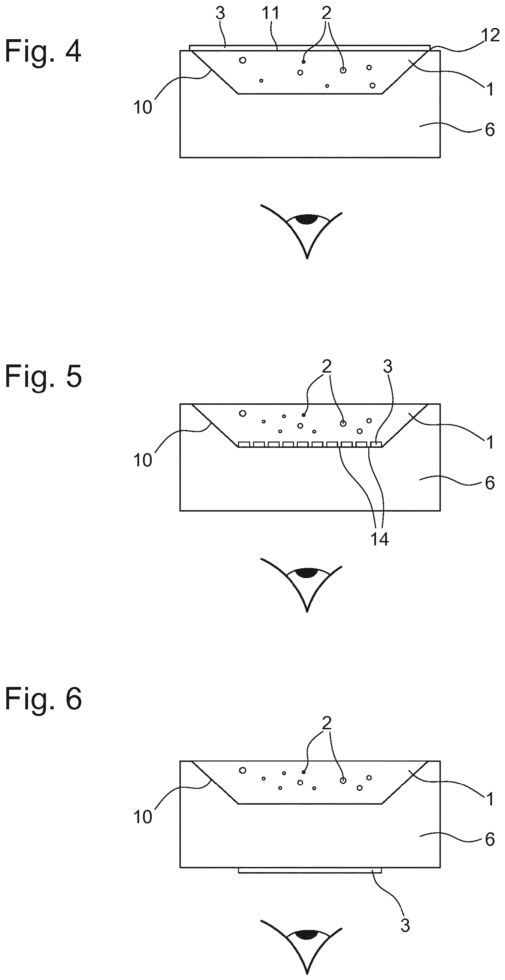

Selon un mode de réalisation de l'invention représenté sur la figure 4, le substrat 6 est au moins semi-transparent, voire transparent, et destiné à être du côté d'un utilisateur. En outre, le décor est formé d'une première couche au moins semi-transparente constituant le premier élément de décor 1 et comprenant un premier liant dans lequel sont dispersés, comme premier matériau, des pigments photoluminescents 2, et d'une seconde couche constituant le second élément de décor 3 et constituée par un film métallique du type de celui décrit en liaison avec la deuxième variante, ladite première couche 1 étant disposée entre le substrat 6 et la seconde couche 3, de sorte que la première couche transparente 1 est destinée à être plus près de l'utilisateur que la seconde couche 3.

En outre, le deuxième élément de décor 3 est de préférence dimensionné pour se superposer sensiblement à la surface couverte par ledit premier élément de décor 1.

La première couche semi-transparente ou transparente constituant le premier élément de décor 1 présente de préférence une épaisseur comprise entre 0.1 mm et 2mm. Elle comprend entre 1 % et 10% en poids de pigments photoluminescents comme détaillé ci-dessus afin d'être semi-transparente ou transparente.

La première couche au moins semi-transparente constituant le premier élément de décor 1 à base de pigments photoluminescents 2 et la seconde couche constituant le second élément de décor 3 à base de particules 4 métalliques ou variochromiques sont superposées, la première couche 1 étant destinée à être plus proche de l'utilisateur que la seconde couche 3. Ainsi, le décor formé par la superposition des premier et second éléments de décor 1, 3 présente un aspect métallique ou une couleur variant sous l'effet d'un stimulus lié au matériau variochromique, donné par le second élément de décor 3 apparaissant sous le premier élément de décor 1 transparent lorsque l'élément d'horlogerie est exposé à la lumière, et le décor présente un aspect phosphorescent donné par le premier élément de décor 1 positionné au plus près de l'utilisateur, lorsque l'élément d'horlogerie est dans l'obscurité.

D'une manière avantageuse, le substrat 6 comprend au moins une loge 10 gravée dans le substrat, par exemple par laser, ladite loge 10 comprenant au moins le premier élément de décor 1.

Avantageusement, le film constituant le second élément de décor 3 est déposé par un dépôt en phase vapeur (CVD ou PVD) sur la surface 11 du premier élément de décor 1 qui débouche de la loge 10, et éventuellement sur une zone périphérique 12 du substrat 6. L'épaisseur de la feuille métallique est typiquement comprise entre 50µm à 100µm.

Selon un autre mode de réalisation proche de l'invention représenté sur la figure 5, le substrat 6 est au moins semi-transparent, voire transparent, et destiné à être du côté d'un utilisateur. En outre, le décor est formé d'une première couche constituant le premier élément de décor 1 et comprenant un premier liant dans lequel sont dispersés, comme premier matériau, des pigments photoluminescents 2, et d'une seconde couche constituant le second élément de décor 3 et constituée par un film métallique du type de celui décrit en liaison avec la deuxième variante présentant des perforations 14 perpendiculaires au substrat 6, ladite seconde couche 3 étant disposée entre le substrat 6 et la première couche 1, de sorte que la seconde couche 3 avec les perforations est destinée à être plus près de l'utilisateur que la première couche 1.

Les perforations de diamètre 100µm à 200µm 14 dans le film métallique ou variochromique sont de préférence réalisées par laser après le dépôt du film métallique ou variochromique par exemple par un dépôt en phase vapeur (CVD ou PVD) sur le substrat 6. L'épaisseur de la feuille métallique est typiquement comprise entre 50µm à 100µm. En outre, le deuxième élément de décor 3 est de préférence dimensionné pour se superposer sensiblement à la surface couverte par ledit premier élément de décor 1.

D'une manière avantageuse, le substrat 6 comprend au moins une loge 10 gravée dans le substrat, par exemple par laser, au fond de laquelle est déposé le film métallique ou variochromique perforé constituant le second élément de décor 3, ladite loge étant remplie de la première couche constituant le premier élément de décor 1.

Avantageusement, en particulier si le premier élément de décor 1 occupe sur le substrat une surface supérieure à celle occupée par le second élément de décor 1, la première couche constituant le premier élément de décor est de préférence semi-transparente, voire transparente, comme détaillé ci-dessus.

La première couche constituant le premier élément de décor 1 à base de pigments photoluminescents 2 et la seconde couche constituant le second élément de décor 3 à base de particules 4 métalliques ou variochromiques sont superposées, la seconde couche 3 étant destinée à être plus proche de l'utilisateur que la première couche 1. Ainsi, le décor formé par la superposition des premier et second éléments de décor 1, 3 présente un aspect métallique ou une couleur variant sous l'effet d'un stimulus lié au matériau variochromique, donné par le second élément de décor 3 positionné au plus près de l'utilisateur lorsque l'élément d'horlogerie est exposé à la lumière, et le décor présente un aspect phosphorescent donné par le premier élément de décor 1 apparaissant au travers des perforations 14 du second élément de décor 3, lorsque l'élément d'horlogerie est dans l'obscurité.

Selon un autre mode de réalisation de l'invention qui ne fait pas parti de l'invention et sur la figure 6, le substrat 6 est au moins semi-transparent, voire transparent, et destiné à être du côté d'un utilisateur. En outre, le décor est formé d'une première couche au moins semi-transparente constituant le premier élément de décor 1 et comprenant un premier liant dans lequel sont dispersés, comme premier matériau, des pigments photoluminescents 2, et d'une seconde couche constituant le second élément de décor 3 et constituée par un film métallique du type de celui décrit en liaison avec la deuxième variante, ladite seconde couche 3 étant disposée sur le substrat 6 du côté de l'utilisateur, ladite première couche 1 étant déposée sur le substrat 6, du côté opposé à la seconde couche 3, la surface occupée par le second élément de décor sur le substrat 6 présentant des dimensions inférieures aux dimensions de la surface du premier élément de décor 1 afin de pouvoir créer un halo phosphorescent autour du second élément de décor 3 quand l'élément d'horlogerie est dans l'obscurité.

D'une manière avantageuse, le substrat 6 comprend au moins une loge 10 gravée dans le substrat, par exemple par laser, débouchant sur la face opposée au second élément de décor 3, et remplie de la première couche constituant le premier élément de décor 1.

Avantageusement, le film constituant le second élément de décor 3 est déposé par un dépôt en phase vapeur (CVD ou PVD) sur la surface du substrat 6 pour être au plus près de l'utilisateur.

La première couche constituant le premier élément de décor 1 à base de pigments photoluminescents 2 et la seconde couche constituant le second élément de décor 3 à base de particules 4 métalliques ou variochromiques sont superposées, la seconde couche 3 étant destinée à être plus proche de l'utilisateur que la première couche 1. Ainsi, le décor formé par la superposition des premier et second éléments de décor 1, 3 présente un aspect métallique ou une couleur variant sous l'effet d'un stimulus lié au matériau variochromique, donné par le second élément de décor 3 positionné au plus près de l'utilisateur lorsque l'élément d'horlogerie est exposé à la lumière, et le décor présente un halo phosphorescent donné par le premier élément de décor 1 apparaissant à la périphérie du second élément de décor 3, lorsque l'élément d'horlogerie est dans l'obscurité.

## Revendications

1. Elément d'horlogerie comprenant un substrat (6) et au moins un premier élément de décor (1) comprenant au moins un premier matériau photoluminescent destiné à donner un aspect phosphorescent, et où ledit élément d'horlogerie comprend un second élément de décor (3) comprenant au moins un second matériau, ledit second matériau étant métallique, destiné à donner un aspect métallique, ou variochromique, destiné à donner une couleur variant sous l'effet d'un stimulus, ledit premier élément de décor (1) et ledit second élément de décor (3) étant agencés l'un par rapport à l'autre sur le substrat (6) pour former un décor d'aspect métallique ou d'une couleur variant sous l'effet d'un stimulus lorsque ledit élément d'horlogerie est exposé à la lumière et d'aspect phosphorescent lorsque ledit élément d'horlogerie est dans l'obscurité **caractérisé en ce que** le décor est bicouche, formé d'une première couche au moins semi-transparente constituant le premier élément de décor (1) et comprenant un premier liant dans lequel sont dispersés, comme premier matériau, des pigments photoluminescents (2), et d'une seconde couche constituant le second élément de décor (3) et comprenant un second liant dans lequel sont dispersées, comme second matériau, des particules (4) métalliques ou métallisées pelliculantes ou des particules variochromiques, ladite seconde couche étant disposée entre le substrat (6) et la première couche destinée à être côté utilisateur.

2. Elément selon la revendication 1, **caractérisé en ce que** la première couche transparente comprend entre 1% et 10% en poids de pigments photoluminescents (2).

3. Elément selon l'une des revendications précédentes, **caractérisé en ce que** le matériau variochromique est constitué d'au moins un pigment de type photochromique ou thermochromique.

4. Pièce d'horlogerie comprenant un élément selon l'une des revendications 1 à 3.

## Patentansprüche

1. Uhrenbauteil, umfassend ein Substrat (6) und mindestens ein erstes Dekorelement (1), das mindestens ein erstes photolumineszierendes Material umfasst, welches dazu bestimmt ist, ein phosphoreszierendes Erscheinungsbild zu erzeugen, wobei das Uhrenbauteil ein zweites Dekorelement (3) umfasst, das mindestens ein zweites Material umfasst, wobei das zweite Material ein metallisches Material ist, das dazu bestimmt ist, ein metallisches Erscheinungsbild zu erzeugen, oder ein variochromes Material ist, das dazu bestimmt ist, eine sich unter der Einwirkung eines Stimulus verändernde Farbe zu erzeugen, wobei das erste Dekorelement (1) und das zweite Dekorelement (3) relativ zueinander derart auf dem Substrat (6) angeordnet sind, dass sie ein Dekor bilden, das ein metallisches Erscheinungsbild oder eine sich unter der Einwirkung eines Stimulus verändernde Farbe aufweist, wenn das Uhrenbauteil Licht ausgesetzt ist, und ein phosphoreszierendes Erscheinungsbild aufweist, wenn sich das Uhrenbauteil in Dunkelheit befindet, **dadurch gekennzeichnet, dass** das Dekor zweischichtig ausgebildet ist und aus einer mindestens teilweise transparenten ersten Schicht, die das erste Dekorelement (1) bildet und ein erstes Bindemittel umfasst, in dem als erstes Material photolumineszierende Pigmente (2) dispergiert sind, und einer zweiten Schicht gebildet ist, die das zweite Dekorelement (3) bildet und ein zweites Bindemittel umfasst, in dem als zweites Material metallische oder metallisierte Partikel (4) mit Leafing-Verhalten oder variochrome Partikel dispergiert sind, wobei die zweite Schicht zwischen dem Substrat (6) und der ersten Schicht angeordnet ist, die dazu bestimmt ist, dem Benutzer zugewandt zu sein.

2. Uhrenbauteil nach Anspruch 1, **dadurch gekennzeichnet, dass** die erste transparente Schicht 1 Gew.-% bis 10 Gew.-% photolumineszierende Pigmente (2) umfasst.

3. Uhrenbauteil nach einem der vorhergehenden Ansprüche, **dadurch gekennzeichnet, dass** das variochrome Material mindestens ein photochromes oder thermochromes Pigment umfasst.

4. Uhr, umfassend ein Uhrenbauteil nach einem der Ansprüche 1 bis 3.

## Claims

1. Horological component comprising a substrate (6) and at least one first decoration component (1) comprising at least one first photoluminescent material intended to procure a phosphorescent appearance, and where said horological component comprises a second decoration component (3) comprising at least one second material, said second material being metallic and intended to procure a metallic appearance, or variochromic and intended to procure a colour that varies under the effect of a stimulus, said first decoration component (1) and said second decoration component (3) being arranged relative to one another on the substrate (6) to form a decoration having a metallic appearance or a colour that varies under the effect of a stimulus when said horological component is exposed to light and a phosphorescent appearance when said horological component is in the dark **characterised in that** the decoration is a two-layer decoration, formed by a first layer that is at least semi-transparent, constituting the first decoration component (1) and comprising a first binder in which photoluminescent pigments (2) are dispersed, as a first material, and by a second layer constituting the second decoration component (3) and comprising a second binder in which leafing metallised or metallic particles (4) or variochromic particles are dispersed, as a second material, said second layer being disposed between the substrate (6) and the first layer intended to be situated as close as possible to a user.

2. Component according to claim 1, **characterised in that** the first transparent layer comprises between 1 wt% and 10 wt% photoluminescent pigments (2).

3. Component according to one of the preceding claims, **characterised in that** the variochromic material is constituted by at least one pigment of the photochromic or thermochromic type.

4. Timepiece comprising a component according to one of claims 1 to 3.
